# NEUE EUROPÄISCHE PATENTSCHRIFT

(11) **EP 3 183 083 B2**
(45) Veröffentlichungstag und Bekanntmachung des Hinweises auf die Entscheidung über den Einspruch: **08.02.2023**
(45) Hinweis auf die Patenterteilung: 03.07.2019
(21) Anmeldenummer: 15753354.8
(22) Anmeldetag: 18.08.2015
(51) Int. Cl.: B29C 64/153, B29C 64/40, B22F 3/105, B22F 3/24, B33Y 10/00, B22F 5/04

(54) **VERFAHREN ZUM HERSTELLEN EINES DREIDIMENSIONALEN OBJEKTS**
METHOD FOR PRODUCING A THREE-DIMENSIONAL OBJECT
PROCÉDÉ DE FABRICATION D'UN OBJET TRIDIMENSIONNEL

(30) Priorität: 22.08.2014 DE 102014012425
(43) Veröffentlichungstag der Anmeldung: 28.06.2017
(60) Teilanmeldung: 19177090.8
(73) Patentinhaber: CL Schutzrechtsverwaltungs GmbH, 96215 Lichtenfels (DE)
(72) Erfinder: HERZOG, Frank, 96215 Lichtenfels (DE)
(74) Vertreter: Hafner & Kohl PartmbB
(86) Internationale Anmeldenummer: PCT/EP2015/068938
(87) Internationale Veröffentlichungsnummer: WO 2016/026852

(56) Entgegenhaltungen:
- EP-A1- 1 614 526
- US-A1- 2006 236 544
- US-A1- 2012 255 176

## Beschreibung

Die Erfindung betrifft ein Verfahren zum Herstellen eines dreidimensionalen Objekts durch aufeinander folgendes Verfestigen von Schichten eines mittels Strahlung verfestigbaren pulverartigen Baumaterials.

Bei derartigen Verfahren handelt es sich im Allgemeinen um generative Prozesse zur Ausbildung bzw. Herstellung dreidimensionaler Objekte bzw. Gegenstände, wie z. B. technischer Bauteile. Das Grundprinzip derartiger Verfahren sieht vor, das jeweils herzustellende dreidimensionale Objekt durch aufeinanderfolgendes bzw. sukzessives Verfestigen von Schichten eines mittels Strahlung, typischerweise Laserstrahlung, verfestigbaren pulverartigen Baumaterials auszubilden. Bekannte Beispiele solcher Verfahren sind demnach Lasersinterverfahren, kurz SLS-Verfahren, oder Laserschmelzverfahren, kurz SLM-Verfahren.

Besonders bei der Herstellung großformatiger dreidimensionaler Objekte, d. h. bei der Herstellung von Objekten mit großen Abmessungen, wie z. B. Turbinenschaufeln, Gehäusestrukturen, können material- bzw. prozessbedingt Verzugseffekte auftreten, welche eine endmaßgenaue Herstellung des herzustellenden dreidimensionalen Objekts erschweren.

Gleichermaßen stellt die Handhabung großformatiger dreidimensionaler Objekte während bzw. nach der Herstellung regelmäßig eine Herausforderung dar.

EP 1 614 526 A1 offenbart ein Prinzip zur additiven Herstellung großformatiger dreidimensionaler Bauteile auf einer Stützstruktur.

US 2012/0255176 A1 offenbart ein Prinzip zur additiven Herstellung dreidimensionaler Bauteile.

US 2006/0236544 A1 offenbart ein Prinzip zur additiven Herstellung dreidimensionaler Bauteile.

Der Erfindung liegt die Aufgabe zugrunde, ein verbessertes Verfahren zum Herstellen von, insbesondere großformatigen, dreidimensionalen Objekten durch aufeinander folgendes Verfestigen von Schichten eines mittels Strahlung verfestigbaren pulverartigen Baumaterials anzugeben.

Diese Aufgabe wird durch ein Verfahren gemäß Anspruch 1 gelöst. Die Unteransprüche betreffen vorteilhafte Weiterbildungen des Verfahrens nach der Erfindung.

Das erfindungsgemäße Verfahren zum Herstellen eines dreidimensionalen Objekts durch aufeinander folgendes Verfestigen von Schichten eines mittels Strahlung verfestigbaren pulverartigen Baumaterials umfasst folgende Verfahrensschritte:
Zunächst wird eine Lasersinter- oder Laserschmelzanlage mit den üblichen Komponenten vorgesehen. Diese üblichen Komponenten sind ein Gehäuse mit einer darin untergebrachten Baukammer, wobei in der Baukammer eine Tragevorrichtung zum Tragen des Objektes vorgesehen wird. Außerdem ist eine Beschichtungsvorrichtung vorhanden, um Aufbaumaterial schichtweise auf einen Träger oder auf eine vorher aufgebrachte Schicht aufzubringen. Mit einer Bestrahlungseinrichtung werden die Schichten bestrahlt und dadurch an den dem jeweiligen Querschnitt des Objektes entsprechenden Stelen verfestigt, wozu die Bestrahlungseinrichtung in der Regel einen Scanner zur Ablenkung elektromagnetischer Strahlung einer Strahlungsquelle umfasst, die in der Regel als Laser ausgebildet ist. Sodann wird eine Stützstruktur ausgebildet, dies geschieht meistens auf einer Unterlage, wie z. B. einer Bauplatte. Jedenfalls sollte die Stützstruktur in ihrem Basisbereich miteinander verbunden sein. Der Aufbau der Stützstruktur erfolgt generativ.

Verfahrensgemäß wird somit eine Stützstruktur zur zumindest abschnittsweisen Stützung des herzustellenden dreidimensionalen Objekts durch aufeinander folgendes Verfestigen von Schichten des oder eines mittels Strahlung verfestigbaren pulverartigen Baumaterials ausgebildet. Es erfolgt also neben der bzw. zusätzlich zur Ausbildung des eigentlich herzustellenden dreidimensionalen Objekts auch die Ausbildung einer Stützstruktur, deren Aufgabe und Funktion weiter unten näher erläutert wird. Wesentlich ist also, dass neben dem eigentlich herzustellenden dreidimensionalen Objekt auch die Stützstruktur durch aufeinander folgendes Verfestigen des oder eines mittels Strahlung verfestigbaren pulverartigen Baumaterials ausgebildet wird. Die Stützstruktur wird also in demselben Prozess ausgebildet, in welchem auch das eigentlich herzustellende dreidimensionale Objekt ausgebildet wird.

Die Stützstruktur dient zur zumindest abschnittsweisen, typischerweise vollständigen, Lagerung bzw. Stützung des herzustellenden dreidimensionalen Objekts. Das herzustellende dreidimensionale Objekt wird sonach sukzessive auf der Stützstruktur aufgebaut. Die Stützstruktur ist entsprechend in ihrer geometrischen Gestalt, insbesondere in ihrem Querschnitt, an die geometrische Gestalt, insbesondere den Querschnitt, des herzustellenden dreidimensionalen Objekts anzupassen bzw. angepasst. Um die beschriebene Stützfunktion zu erfüllen, bildet die Stützstruktur den Querschnitt des herzustellenden dreidimensionalen Objekts sonach typischerweise vollständig ab.

Die Stützstruktur umfasst typischerweise wenigstens ein Stützelement, welches zur zumindest abschnittsweisen Lagerung bzw. Stützung des oder eines Teils des herzustellenden dreidimensionalen Objekts dient. In der Regel umfasst die Stützstruktur jedoch mehrere Stützelemente gleicher oder ungleicher geometrischer Gestalt, d. h. insbesondere gleicher oder ungleicher Form respektive gleicher oder ungleicher Abmessungen. Die Stützelemente können in regelmäßiger oder unregelmäßiger Anordnung vorliegen. Die Stützelemente können z. B. steg- oder stützpfeilerartig ausgebildet sein und Verzweigungen aufweisen.

Die Ausbildung der Stützstruktur erfolgt typischerweise auf einer Bauplatte der Baukammer der Vorrichtung zur Durchführung des Verfahrens, d. h. insbesondere einer Vorrichtung zur Durchführung eines Lasersinterprozesses oder eines Laserschmelzprozesses.

Gleichzeitig bzw. simultan und somit gemeinsam mit der Ausbildung der Stützstruktur oder nach der Ausbildung der Stützstruktur wird das eigentlich herzustellende dreidimensionale Objekt ausgebildet. Wesentlich ist dabei, dass das dreidimensionale Objekt segmentiert ausgebildet wird. Es werden also mehrere, jeweils einen bestimmten Querschnittsteilbereich des herzustellenden dreidimensionalen Objekts bildende einzelne bzw. separate Teilobjekte ausgebildet, welche, wie weiter unten erläutert wird, im Weiteren unter Ausbildung des dreidimensionalen Objekts miteinander zu verbinden sind bzw. miteinander verbunden werden. Jedes Teilobjekt bildet also einen bestimmten Teil des Gesamtquerschnitts des dreidimensionalen Objekts ab. Das herzustellende dreidimensionale Objekt wird also nicht zusammenhängend über seinen vollständigen Querschnitt aufgebaut. Vielmehr werden sukzessive einzelne, jeweils einen bestimmten Teilbereich des herzustellenden dreidimensionalen Objekts bildende Teilobjekte aufgebaut. Die Teilobjekte werden positionsmäßig typischerweise derart relativ zueinander ausgebildet, dass deren Anordnung das gesamte dreidimensionale Objekt abbildet bzw. ergibt.

Die oder ein Teil der Teilobjekte können mit gleicher oder ungleicher geometrischer Gestalt, d. h. insbesondere gleicher oder ungleicher Form respektive gleicher oder ungleicher Abmessungen, ausgebildet werden. Die konkrete geometrische Gestalt jeweiliger Teilobjekte hängt von den durch diese jeweils abzubildenden Teilbereichen des herzustellenden dreidimensionalen Objekts und somit von dem Gesamtquerschnitt des herzustellenden dreidimensionalen Objekts ab. Hieraus ergibt sich, dass Abmessungen, Anordnung und Orientierung entsprechender Teilobjekte in Abhängigkeit der konkreten Abmessungen des jeweils herzustellenden Objekts ausgebildet werden.

Durch die, insbesondere querschnittliche, Auf- bzw. Unterteilung des herzustellenden dreidimensionalen Objekts in einzelne Teilobjekte werden material- bzw. fertigungsbedingte Verzugseffekte reduziert. Dies begründet sich dadurch, dass entsprechende Verzugseffekte in den im Vergleich zu dem fertig hergestellten dreidimensionalen Objekt flächen- bzw. volumenmäßig erheblich kleineren Teilobjekten deutlich geringer ausfallen.

Aus obigen Ausführungen zu der Stützstruktur ergibt sich, dass die Teilobjekte jeweils zumindest abschnittsweise durch die Stützstruktur gestützt werden. Die Stützstruktur gewährleistet gleichermaßen, dass die Teilobjekte in ihrer relativen Position zueinander sicher angeordnet sind bzw. werden. Die Stützstruktur kann also gemeinsam mit den durch diese gelagerten bzw. gestützten Teilobjekten ohne Veränderung der Relativposition der einzelnen Teilobjekte zueinander bewegt werden, was einen erheblichen Vorteil im Hinblick auf die Handhabbarkeit des dreidimensionalen Objekts bedeutet. Selbstverständlich kann auch eine entsprechende Bauplatte samt der drauf ausgebildeten Stützstruktur und der darauf ausgebildeten Teilobjekte ohne Veränderung der Relativposition der einzelnen Teilobjekte zueinander bewegt werden.

Wie erwähnt, sind die einzelnen Teilobjekte zur Ausbildung des dreidimensionalen Objekts miteinander zu verbinden. Es ist also verfahrensgemäß vorgesehen, mehrere Verbindungsbereiche zwischen den einzelnen Teilobjekten zur zumindest abschnittsweisen Verbindung der Teilobjekte unter Ausbildung des dreidimensionalen Objekts auszubilden. Während der Ausbildung jeweiliger Verbindungsbereiche sind die Teilobjekte typischerweise durch die Stützstruktur gestützt, d. h. auf dieser, insbesondere in ihrer festen Relativposition zueinander, gelagert.

Entsprechende Verbindungsbereiche können grundsätzlich in beliebiger geometrischer Gestalt ausgebildet werden. Die Verbindungsbereiche können sonach z. B. punkt- oder linienförmig oder flächig ausgebildet werden. Die Verbindungsbereiche können zumindest teilweise z.B. auch als Stege, Brücken, Dehnungsstreifen, Stäbe und dergleichen ausgebildet werden oder die Form von ineinander eingreifenden Verzahnungen oder sonstigen Formschlusselementen aufweisen. Wesentlich ist, dass die Verbindungsbereiche benachbart angeordnete Teilobjekte stabil miteinander verbinden. Typischerweise verbindet ein Verbindungsbereich dabei wenigstens zwei unmittelbar benachbart angeordnete Teilobjekte. Abmessungen, Anordnung und Orientierung entsprechender Verbindungsbereiche werden typischerweise in Abhängigkeit der konkreten Abmessungen des jeweils herzustellenden Objekts ausgebildet.

Nach Verbindung der Teilobjekte miteinander kann eine Wärmebehandlung erfolgen, um Spannungen in dem dann zusammenhängenden Gesamtbauteil zu reduzieren.

In einem letzten Schritt des Verfahrens wird das vollständig ausgebildete dreidimensionale Objekt von der Stützstruktur entfernt. Das dreidimensionale Objekt kann dabei z. B. manuell oder (teil-)automatisiert von der Stützstruktur abgenommen werden. Möglich ist es selbstverständlich auch, dass die Stützstruktur manuell oder (teil-)automatisiert von dem dreidimensionalen Objekt abgenommen wird.

Aus vorstehenden Ausführungen ergibt sich, dass die Ausbildung des eigentlich herzustellenden dreidimensionalen Objekts in wenigstens zwei Stufen erfolgt. In einer ersten Stufe werden neben der Stützstruktur die einzelnen Teilobjekte ausgebildet. Die einzelnen Teilobjekte werden durch die Stützstruktur gestützt. Die Stützung beinhaltet, wie beschrieben, gleichermaßen eine (temporäre) Sicherung der Relativposition der einzelnen Teilobjekte zueinander. In einer weiteren bzw. in einer zweiten Stufe werden die einzelnen Teilobjekte durch die Ausbildung entsprechender Verbindungsbereiche miteinander verbunden. Hierdurch wird gleichermaßen das eigentlich herzustellende dreidimensionale Objekt ausgebildet.

Im Rahmen des Verfahrens liegen typischerweise wenigstens zwei Datensätze vor, auf Basis welcher eine schichtweise Verfestigung des bzw. allgemein eines Baumaterials zur Ausbildung der Stützstruktur sowie der Teilobjekte bzw. des Objekts erfolgt. Ein erster Datensatz betrifft die sukzessive Ausbildung der Stützstruktur. In dem ersten Datensatz sind sonach sämtliche Daten bezüglich der Stützstruktur enthalten. Ein weiterer bzw. zweiter Datensatz betrifft die sukzessive Ausbildung des Objekts bzw. der Teilobjekte. In dem weiteren bzw. zweiten Datensatz sind sonach sämtliche Daten bezüglich des Objekts bzw. bezüglich der Teilobjekte enthalten. Der zweite Datensatz beinhaltet entsprechend insbesondere auch eine segmentierte Auf- bzw. Unterteilung des Objekts in einzelne Teilobjekte.

Im Zusammenhang mit der Ausbildung entsprechender Verbindungsbereiche ist es denkbar, dass die Verbindungsbereiche in Abhängigkeit der Position der über diese zu verbindenden Teilobjekte bezüglich des herzustellenden dreidimensionalen Objekts geometrisch unterschiedlich ausgeführt werden. Die geometrische Gestalt, d. h. insbesondere Abmessungen und Form, jeweiliger Verbindungsbereiche kann also davon abhängen, an welcher Position sich diese bezogen auf das herzustellende dreidimensionale Objekt befinden. Die geometrische Gestalt jeweiliger Verbindungsbereiche hängt insofern auch davon ab, welche konkreten Teilobjekte diese miteinander verbinden. Es ist also z. B. denkbar, dass Verbindungsbereiche, welche in äußeren Bereichen, d. h. z. B. Randbereichen des dreidimensionalen Objekts, des herzustellenden dreidimensionalen Objekts angeordnete Teilobjekte miteinander verbinden, geometrisch anders ausgeführt werden, als Verbindungsbereiche, welche in im Vergleich inneren Bereichen, d. h. z. B. im Bereich des Schwerpunkts bzw. Zentrums des dreidimensionalen Objekts, angeordnete Teilobjekte miteinander verbinden. Derart können beispielsweise lokal unterschiedliche mechanische Beanspruchungen des fertigen dreidimensionalen Objekts, insbesondere im Zusammenhang mit einer spezifischen Anwendungs- bzw. Lastsituation, berücksichtigt werden. Konkret können Verbindungsbereiche, welche in äußeren Bereichen des dreidimensionalen Objekts angeordnete Teilobjekte miteinander verbinden, z. B. punktförmig ausgebildet werden, wohingegen Verbindungsbereich, welche in im Vergleich inneren Bereichen des dreidimensionalen Objekts angeordnete Teilobjekte miteinander verbinden, z. B. linienförmig ausgebildet werden.

Es ist auch denkbar, zunächst zumindest einen Teil der Teilobjekte nur über Verbindungsbereiche einer ersten geometrischen Gestalt, d. h. z. B. punktförmige Verbindungsbereiche, im Sinne einer Vorfixierung bzw. zur Realisierung einer solchen zu verbinden, um die Teilobjekte z. B. in einen handhabungsfähigen Zustand zu überführen, und die eigentliche Verbindung der Teilobjekte durch nachfolgend ausgebildete Verbindungsbereiche einer zweiten geometrischen Gestalt, d. h. z. B. linienförmige Verbindungsbereiche, bzw. nachfolgendes Ergänzen der Verbindungsbereiche der ersten geometrischen Gestalt, z. B. zu linienförmigen Verbindungsbereichen, auszubilden. Die Verbindungsbereiche der ersten geometrischen Gestalt können dabei mechanisch weniger stabil ausgeführt sein als jeweilige Verbindungsbereiche der zweiten geometrischen Gestalt.

Wie erwähnt, können die Stützstruktur und die Teilobjekte zumindest teilweise gleichzeitig bzw. simultan und somit gemeinsam ausgebildet werden. Es ist also möglich, zumindest einen Teil der Stützstruktur und zumindest einen Teil der Teilobjekte simultan bzw. gemeinsam auszubilden. Dies betrifft insbesondere Fälle, in denen über eine zu verfestigende Schicht in einem bestimmten Teilbereich der Baukammer gemäß den Abmessungen des herzustellenden dreidimensionalen Objekts bereits ein Teilobjekt auszubilden und in einem anderen Teilbereich der Baukammer entsprechend (noch) kein Teilobjekt, sondern ein Teil der Stützstruktur, d. h. z. B. ein Stützelement, auszubilden ist. Insgesamt ist es damit möglich, die Stützstruktur sowie das herzustellende dreidimensionale Objekt auf fertigungstechnisch besonders effiziente Weise auszubilden.

Das Ausbilden der Verbindungsbereiche kann außerhalb oder innerhalb der oder allgemein einer Vorrichtung zum Herstellen eines dreidimensionalen Objekts durch aufeinander folgendes Verfestigen von Schichten eines mittels Strahlung verfestigbaren pulverartigen Baumaterials, insbesondere einer Vorrichtung zum Durchführen eines Lasersinterprozesses oder eines Laserschmelzprozesses, durchgeführt werden. Die Verbindungsbereiche können durch eine herkömmliche Schweißvorrichtung hergestellt werden, d.h. als Schweißpunkte oder Schweißraupen ausgebildet werden. Die Verbindungsbereiche können aber auch in ein und demselben Prozess, in dem auch die Stützstruktur sowie die Teilobjekte ausgebildet werden, und somit in ein und derselben Vorrichtung ausgebildet werden. Dies ist jedoch nicht zwingend, vielmehr kann die Verbindung der einzelnen Teilobjekte auch in einem anderen Prozess und somit in einer anderen Vorrichtung erfolgen. Letzteres kann beispielsweise erforderlich sein, wenn an die Verbindungsbereiche besondere Anforderungen gestellt werden, welche sich nur in einem zu dem Prozess zur Ausbildung der Stützstruktur sowie der Teilobjekte separaten Prozess zufriedenstellend realisieren lassen. In diesem Zusammenhang ist nochmals zu erwähnen, dass die einzelnen Teilobjekte durch die Stützstruktur ohne weiteres, insbesondere unter Wahrung deren Relativposition zueinander, bewegt bzw. gehandhabt werden können, um diese z. B. zwischen entsprechende Prozesse implementierenden Vorrichtungen hin und her zu bewegen.

Die Verbindungsbereiche können derart ausgebildet werden, dass sie jeweils nebeneinander und/oder übereinander angeordnet auszubildende oder ausgebildete Teilobjekte zumindest abschnittsweise miteinander verbinden. Über einen Verbindungsbereich können also grundsätzlich sowohl horizontal, d. h. in einer horizontalen Ebene, angeordnete Teilobjekte als auch vertikal, d. h. in wenigstens zwei vertikal übereinander liegenden horizontalen Ebenen, angeordnete Teilobjekte miteinander verbunden werden.

Im Hinblick auf die (weitere) Reduzierung bzw. Kompensierung material- bzw. prozessbedingt auftretender mechanischer Spannungen innerhalb der Teilobjekte respektive innerhalb des dreidimensionalen Objekts kann wenigstens einen Teil der Verbindungsbereiche zumindest abschnittsweise derart elastisch federnd ausgebildet werden, dass verzugsbedingte mechanische Spannungen, d. h. Zug- und/oder Druckspannungen, der Teilobjekte und/oder des vollständigen dreidimensionalen Objekts zumindest teilweise reduziert werden. Die oder ein Teil der Verbindungsbereiche kann sonach z. B. über deren jeweilige geometrische Gestalt, d. h. insbesondere Abmessungen und Form, mit elastisch federnden Eigenschaften ausgebildet werden, über welche sich mechanische Spannungen innerhalb der oder zwischen den Teilobjekten reduzieren bzw. kompensieren lassen.

Mit der gleichen Zielrichtung ist es möglich, dass nebeneinander und/oder übereinander angeordnete Teilobjekte derart miteinander verbunden werden, dass zwischen diesen ein schlitzartiger Spaltraum gebildet wird. Die Ausbildung schlitzartiger Spalträume, kurz Schlitze, zwischen entsprechend benachbart angeordneten Teilobjekte stellt also gleichermaßen eine Möglichkeit zur Reduzierung bzw. Kompensation material- bzw. fertigungsbedingter mechanischer Spannungen dar. Die mechanische Verbindung jeweiliger Teilobjekte wird durch die Ausbildung entsprechender schlitzartiger Spalträume nicht beeinträchtigt. Die schlitzartigen Spalträume können geometrisch so gering bemessen, d. h. so schmal, sein, dass diese am fertigen Objekt nicht oder kaum zu erkennen sind. Typischerweise weist ein entsprechend gebildeter schlitzartiger Spaltraum eine Breite in einem Bereich von 1 bis 100 µm, insbesondere in einem Bereich von 10 bis 30 µm, auf. Selbstverständlich sind Ausnahmen nach oben und unten möglich.

Das Ausbilden entsprechender Verbindungsbereiche kann durch Verfestigen pulverartigen Baumaterials und/oder durch Aufschmelzen bereits verfestigter Teilobjektabschnitte jeweiliger hergestellter Teilobjekte erfolgen. Die Verbindungsbereiche können also aus einer auf die Teilobjekte aufgebrachten Schicht pulverartigen Baumaterials oder durch erneutes Aufschmelzen bereits verfestigter Teilobjektabschnitte ausgebildet werden.

Es wurde erwähnt, dass die Teilobjekte, d. h. typischerweise benachbart angeordnete Teilobjekte, durch entsprechende Verbindungsbereiche stabil miteinander verbunden werden. Vorzugsweise werden jeweilige zu verbindende Teilobjekte durch das Ausbilden entsprechender Verbindungsbereiche dabei stoffschlüssig miteinander verbunden. Stoffschlüssige Verbindungen sind typischerweise mechanisch hoch beanspruchbar bzw. mechanisch hoch stabil.

Jeweilige über Verbindungsbereiche zu verbindende Teilobjekte werden daher vorzugsweise miteinander verschweißt. Die Verbindungsbereiche stellen sonach vorzugsweise Schweißverbindungen dar, d. h. die Verbindungsbereiche liegen vorzugsweise als Schweißpunkte oder Schweißnähte vor bzw. umfassen solche. Die Verbindung der Teilobjekte vermittels Schweißens ist insofern praktikabel, als die im Rahmen des Verfahrens eingesetzten pulverartigen Baumaterialien typischerweise ohnehin schweißbar sind.

Das auf der Stützstruktur angeordnete dreidimensionale Objekt kann weiter bearbeitet bzw. behandelt werden. So ist es z. B. möglich, dass das weiterhin auf der Stützstruktur angeordnete dreidimensionale Objekt geeigneten Nachbearbeitungsprozessen zur Erhöhung der Oberflächengüte unterzogen wird. Möglich ist es auch, das weiterhin auf der Bauplatte und/oder Stützstruktur angeordnete dreidimensionale Objekt einer Wärmebehandlung zu unterziehen, etwa um gegebenenfalls vorhandene innere mechanische Spannungen abzubauen. Eine Wärmebehandlung beinhaltet insbesondere ein Erwärmen des Objekts auf eine Temperatur unterhalb der Schmelztemperatur des verwendeten Baumaterials, sodass ein Abbau innerer mechanischer Spannungen erzielt wird. Möglich ist es ferner, das weiterhin auf der Stützstruktur angeordnete dreidimensionale Objekt zu reinigen, d. h. insbesondere oberflächenseitig anhaftendes Baumaterial zu entfernen. Die Aufzählung vorstehender Weiterbearbeitungsmöglichkeiten bzw. Weiterbehandlungsmöglichkeiten ist allein beispielhaft und nicht abschließend zu verstehen.

Grundsätzlich kann das Ausbilden der Stützstruktur und/oder das Ausbilden der Teilobjekte jedoch auch zeitweise, d. h. für einen bestimmten Zeitraum, unterbrochen werden, um wenigstens eine die Eigenschaften der bis dahin ausgebildeten Stützstruktur und/oder die Eigenschaften der bis dahin ausgebildeten Teilobjekte beeinflussende Maßnahme, wie z. B. eine Wärmebehandlung, durchzuführen.

Wenigstens ein Teilobjekt kann mit wenigstens einem ein, insbesondere geschlossenes, Aufnahmevolumen begrenzenden Aufnahmeraum zur Aufnahme wenigstens eines Drittgegenstands ausgebildet werden. Bei einem solchen Drittgegenstand kann es sich beispielsweise um ein, z. B. sandwichartig aufgebautes, Leichtbauelement einer Leichtbaustruktur handeln. Dies ist insbesondere zweckmäßig, wenn es sich bei dem herzustellenden bzw. hergestellten dreidimensionalen Objekt um ein eine Tragfläche oder einen Teil einer Tragfläche bildendes Tragflächenelement handelt.

An dieser Stelle soll nochmals hervorgehoben werden, dass sich das Verfahren insbesondere zur Herstellung vergleichsweise großformatiger dreidimensionaler Objekte, insbesondere technischer Bauteile, eignet. Als dreidimensionales Objekt kann verfahrensgemäß sonach z. B. ein Kotflügelelement oder ein Turbinenschaufelelement oder ein Tragflächenelement hergestellt werden.

Im Rahmen des Verfahrens kann als pulverartiges Baumaterial sowohl Kunststoffpulver als auch Metallpulver verwendet werden. Unter einem Kunststoffpulver ist selbstverständlich auch ein Kunststoffpulvergemisch aus mehreren chemisch unterschiedlichen Kunststoffen zu verstehen. Ein Kunststoffpulver kann beispielsweise auf Polyamid oder PEEK basieren. Unter einem Metallpulver ist entsprechend selbstverständlich auch ein Metallpulvergemisch aus mehreren chemisch unterschiedlichen Metallen bzw. Metalllegierungen zu verstehen. Ein Metallpulver kann beispielsweise auf Aluminium oder auf Eisen basieren.

Die Erfindung betrifft ferner ein gemäß dem beschriebenen Verfahren hergestelltes dreidimensionales Objekt. Sämtliche Ausführungen im Zusammenhang mit dem Verfahren gelten analog für das dreidimensionale Objekt. Bei dem dreidimensionalen Objekt kann es sich z. B. um ein Kotflügelelement oder ein Turbinenschaufelelement oder ein Tragflächenelement handeln.

Die Erfindung ist anhand von Ausführungsbeispielen in den Zeichnungsfiguren näher erläutert. Dabei zeigen:
- Fig. 1, 2: jeweils eine Prinzipdarstellung zur Veranschaulichung der Durchführung eines Verfahrens gemäß einem Ausführungsbeispiel der Erfindung; und
- Fig. 3: eine vergrößerte Darstellung der in Fig. 2 gezeigten Einzelheit III.

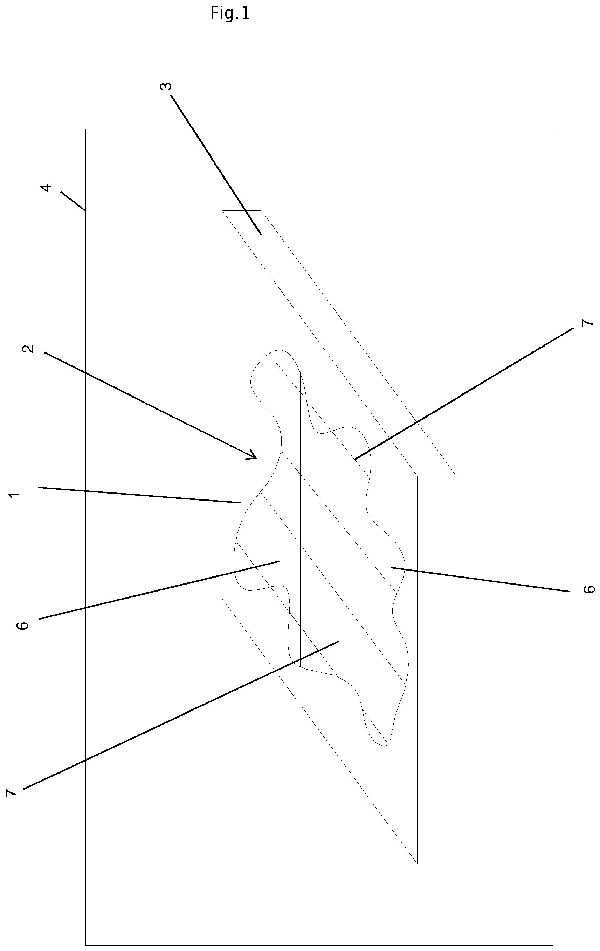

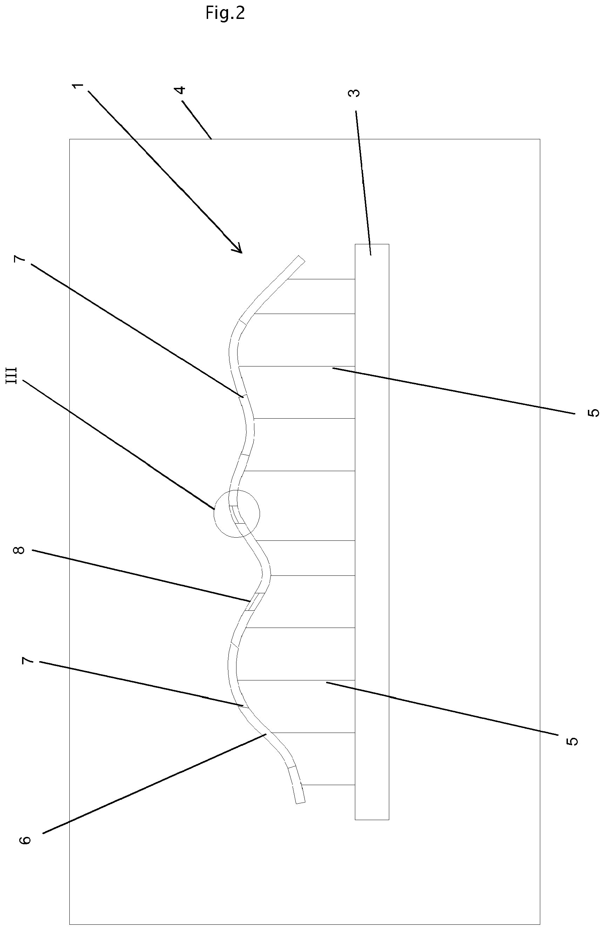

Die Fig. 1, 2 zeigen jeweils eine Prinzipdarstellung zur Veranschaulichung der Durchführung eines Verfahrens gemäß einem Ausführungsbeispiel der Erfindung.

Fig. 1 zeigt eine perspektivische Darstellung zu einem bestimmten Zeitpunkt des Verfahrens, zu welchem eine bestimmte Schicht pulverartigen Baumaterials verfestigt wird. Das dreidimensionale Objekt 1 ist zu diesem Zeitpunkt noch nicht vollständig hergestellt. Fig. 2 eine seitliche bzw. querschnittliche Darstellung zu einem bestimmten Zeitpunkt des Verfahrens.

Mit dem Verfahren lassen sich, insbesondere großformatige, dreidimensionale Objekte 1, insbesondere technische Bauteile, wie z. B. Kotflügelelemente, Turbinenschaufelelemente Tragflächenelemente, handeln. durch aufeinander folgendes Verfestigen von Schichten eines mittels Strahlung verfestigbaren pulverartigen Baumaterials herstellen. Konkret handelt es sich bei dem Verfahren um einen Lasersinterprozess, kurz SLS-Prozess, oder einen Laserschmelzprozess, kurz SLM-Prozess.

Im Rahmen des Verfahrens wird eine Stützstruktur 2 zur zumindest abschnittsweisen Stützung des herzustellenden dreidimensionalen Objekts 1 durch aufeinander folgendes Verfestigen von Schichten eines mittels Strahlung verfestigbaren pulverartigen Baumaterials ausgebildet. Es erfolgt sonach zusätzlich zu der generativen Ausbildung des eigentlich herzustellenden dreidimensionalen Objekts 1 auch eine generative Ausbildung einer Stützstruktur 2. Auch die Stützstruktur 2 wird also durch aufeinanderfolgendes Verfestigen des Baumaterials in demselben Prozess ausgebildet, in welchem auch das eigentlich herzustellende dreidimensionale Objekt 1 ausgebildet.

Die Ausbildung der Stützstruktur erfolgt auf einer Bauplatte 3 einer Baukammer 4 einer nicht näher gezeigten Vorrichtung zur Durchführung des Verfahrens, d. h. insbesondere einer Vorrichtung zur Durchführung eines Lasersinterprozesses oder eines Laserschmelzprozesses.

Die Stützstruktur 2 dient zur Lagerung bzw. Stützung des herzustellenden dreidimensionalen Objekts. Das herzustellende dreidimensionale Objekt 1 wird sukzessive auf der Stützstruktur 2 aufgebaut. Die Stützstruktur 2 ist entsprechend in ihrer geometrischen Gestalt, insbesondere in ihrem Querschnitt, an die geometrische Gestalt, insbesondere den Querschnitt, des herzustellenden dreidimensionalen Objekts 1 angepasst (vgl. Fig. 2). Dabei bildet die Stützstruktur 2 den Querschnitt des herzustellenden dreidimensionalen Objekts 1 in den in den Fig. gezeigten Ausführungsbeispielen vollständig ab.

Wie anhand von Fig. 1 ersichtlich ist, umfasst die Stützstruktur 2 mehrere Stützelemente 5. Die Stützelemente 5 können gleicher oder ungleicher geometrischer Gestalt, d. h. gleicher oder ungleicher Form respektive gleicher oder ungleicher Abmessungen, sein und in regelmäßiger oder unregelmäßiger Anordnung vorliegen. Die in den Fig. gezeigten Stützelemente 5 sind steg- oder stützpfeilerartig ausgebildet.

Das typischerweise gleichzeitig mit der Stützstruktur 2 ausgebildete dreidimensionale Objekt 1 wird segmentiert ausgebildet. Es werden also mehrere, jeweils einen bestimmten Querschnittsteilbereich des herzustellenden dreidimensionalen Objekts 1 bildende einzelne bzw. separate Teilobjekte 6 ausgebildet. Wie sich aus Fig. 2 ergibt, bildet jedes Teilobjekt 6 einen bestimmten Teil des Gesamtquerschnitts des dreidimensionalen Objekts 1 ab. Das herzustellende dreidimensionale Objekt wird also nicht sukzessive über seinen vollständigen Querschnitt aufgebaut, sondern es werden sukzessive einzelne Teilobjekte 6 aufgebaut. Die Teilobjekte 6 werden positionsmäßig derart relativ zueinander ausgebildet, dass deren Anordnung den Gesamtquerschnitt des dreidimensionalen Objekts 1 ergibt.

Durch die, insbesondere querschnittliche, Auf- bzw. Unterteilung des herzustellenden dreidimensionalen Objekts 1 in einzelne Teilobjekte 6 werden material- bzw. fertigungsbedingte Verzugseffekte reduziert, da entsprechende Verzugseffekte in den im Vergleich zu dem fertig hergestellten dreidimensionalen Objekt flächen- bzw. volumenmäßig erheblich kleineren Teilobjekten, wenn überhaupt, deutlich geringer ausfallen.

Die Stützstruktur 2 und die Teilobjekte 6 können, wie erwähnt, gleichzeitig bzw. simultan und somit gemeinsam ausgebildet werden. Anhand von Fig. 2 ist zu erkennen, dass über eine zu verfestigende Schicht pulverartigen Baumaterials in einem bestimmten Teilbereich der Baukammer 4, hier äußeren Bereichen, gemäß den Abmessungen des herzustellenden dreidimensionalen Objekts 1 bereits ein Teilobjekt 6 auszubilden und in einem anderen Teilbereich der Baukammer 4, hier inneren Bereichen, (noch) kein Teilobjekt 6, sondern ein Teil der Stützstruktur 2, d. h. Stützelemente 5, auszubilden ist.

Die Stützstruktur 2 gewährleistet, dass die Teilobjekte 6 in ihrer relativen Position zueinander sicher angeordnet sind bzw. werden. Die Stützstruktur 2 kann also gemeinsam mit den durch diese gelagerten bzw. gestützten Teilobjekten 6 ohne Veränderung der Relativposition der einzelnen Teilobjekte 6 zueinander bewegt bzw. gehandhabt werden. Selbstverständlich kann auch die Bauplatte 3 samt der drauf ausgebildeten Stützstruktur 2 und der darauf ausgebildeten Teilobjekte 6 ohne Veränderung der Relativposition der einzelnen Teilobjekte 6 zueinander bewegt werden.

Zur Verbindung der Teilobjekte 6 werden Verbindungsbereiche 7 zwischen den Teilobjekten 6 zur zumindest abschnittsweisen Verbindung der Teilobjekte 6 unter Ausbildung des dreidimensionalen Objekts 1 ausgebildet. Während der Ausbildung der in den Fig. mit verstärkter Strichlinie dargestellten Verbindungsbereiche 7 sind die Teilobjekte 6 in der Regel durch die Stützstruktur 2 gestützt bzw. gelagert. Das Ausbilden entsprechender Verbindungsbereiche 7 kann durch Verfestigen pulverartigen Baumaterials und/oder durch Aufschmelzen bereits verfestigter Teilobjektabschnitte jeweiliger hergestellter Teilobjekte 6 erfolgen.

Die Verbindungsbereiche 7 verbinden die Teilobjekte 6 typischerweise stoffschlüssig miteinander. Die stoffschlüssige Verbindung erfolgt typischerweise über Schweißverbindungen, die Teilobjekte 6 werden daher typischerweise miteinander verschweißt.

Entsprechende Verbindungsbereiche 7 können grundsätzlich in beliebiger geometrischer Gestalt ausgebildet werden. In Fig. 1 sind beispielhaft sowohl punkt- als auch linienförmige Verbindungsbereiche 7 dargestellt.

Entsprechende Verbindungsbereiche 7 können in Abhängigkeit der Position der über diese zu verbindenden Teilobjekte 6 bezüglich des herzustellenden dreidimensionalen Objekts 1 geometrisch unterschiedlich ausgeführt werden. Die geometrische Gestalt, d. h. insbesondere Abmessungen und Form, jeweiliger Verbindungsbereiche 7 kann also davon abhängen, an welcher Position sich diese bezogen auf das herzustellende dreidimensionale Objekt 1 befinden. In Fig. 1 sind rein exemplarisch Verbindungsbereiche 7, welche in äußeren Bereichen des dreidimensionalen Objekts 1 angeordnete Teilobjekte miteinander verbinden, vornehmlich punktförmig ausgebildet, wohingegen Verbindungsbereiche 7, welche in im Vergleich inneren Bereichen des dreidimensionalen Objekts 1 angeordnete Teilobjekte 6 miteinander verbinden, vornehmlich linienförmig ausgebildet sind.

Es ist auch denkbar, zunächst einen Teil der Teilobjekte 6 nur über Verbindungsbereiche 7 einer ersten geometrischen Gestalt, z. B. punktförmige Verbindungsbereiche 7, zur Realisierung einer Vorfixierung zu verbinden, um die Teilobjekte 6 z. B. in einen handhabungsfähigen Zustand zu überführen, und die eigentliche Verbindung der Teilobjekte 6 durch nachfolgend ausgebildete Verbindungsbereiche 7 einer zweiten geometrischen Gestalt, z. B. linienförmige Verbindungsbereiche 7, bzw. nachfolgendes Ergänzen der Verbindungsbereiche 7 der ersten geometrischen Gestalt , z. B. zu linienförmigen Verbindungsbereichen, auszubilden. Jeweilige Verbindungsbereiche 7 der ersten geometrischen Gestalt können mechanisch weniger stabil ausgeführt sein als jeweilige Verbindungsbereiche 7 der zweiten geometrischen Gestalt.

Das Ausbilden entsprechender Verbindungsbereiche 7 kann außerhalb oder innerhalb der das Verfahren implementierenden Vorrichtung durchgeführt werden. Mithin können auch die Verbindungsbereiche 7 in ein und demselben Prozess, in dem auch die Stützstruktur 2 sowie die Teilobjekte 6 ausgebildet werden, ausgebildet werden.

Im Hinblick auf die (weitere) Reduzierung bzw. Kompensierung material- bzw. prozessbedingt auftretender mechanischer Spannungen innerhalb der Teilobjekte respektive innerhalb des dreidimensionalen Objekts können einzelne oder mehrere Verbindungsbereiche 7 zumindest abschnittsweise derart elastisch federnd ausgebildet werden, dass verzugsbedingte mechanische Spannungen, d. h. Zug- und/oder Druckspannungen, der Teilobjekte 6 bzw. des vollständigen dreidimensionalen Objekts 1 zumindest teilweise reduziert werden. Die Verbindungsbereiche 7 können also, z. B. über deren jeweilige geometrische Gestalt mit elastisch federnden Eigenschaften ausgebildet werden, über welche sich mechanische Spannungen innerhalb der oder zwischen den Teilobjekten 6 reduzieren bzw. kompensieren lassen.

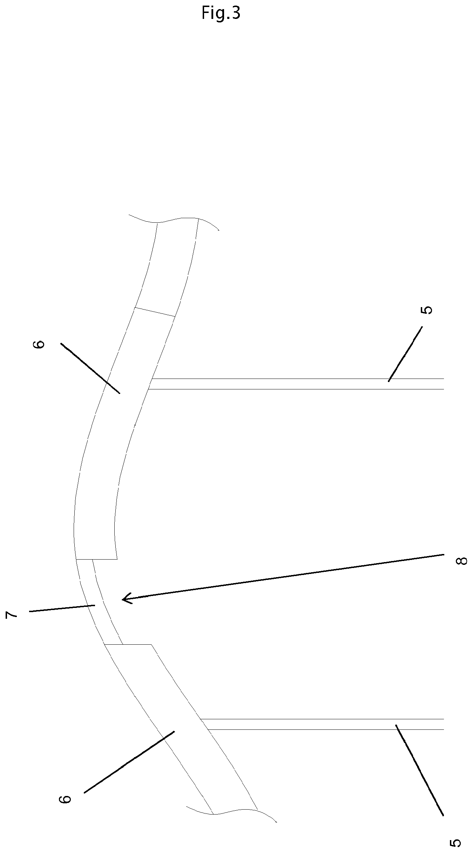

Zweckmäßig werden nebeneinander und/oder übereinander angeordnete Teilobjekte 6 über entsprechende Verbindungsbereiche 7 derart miteinander verbunden, dass zwischen diesen ein schlitzartiger Spaltraum 8, d. h. ein Schlitz, gebildet wird bzw. verbleibt. Ein solcher schlitzartiger Spaltraum 8 ist in Fig. 3 gezeigt. Die Ausbildung schlitzartiger Spalträume 8 zwischen benachbart angeordneten Teilobjekten 6 stellt ebenso eine Möglichkeit zur Reduzierung bzw. Kompensation material- bzw. fertigungsbedingter mechanischer Spannungen dar. Die mechanische Verbindung jeweiliger Teilobjekte wird durch die Ausbildung entsprechender schlitzartiger Spalträume nicht beeinträchtigt. Die schlitzartigen Spalträume 8 sind typischerweise so gering bemessen, d. h. so schmal, dass diese an dem fertigen Objekt 1 nicht oder kaum zu erkennen sind. Typischerweise weisen die schlitzartigen Spalträume 8 eine Breite in einem Bereich von 1 bis 100 µm, insbesondere in einem Bereich von 10 bis 30 µm, auf.

In einem letzten Schritt des Verfahrens wird das vollständig ausgebildete dreidimensionale Objekt 1 von der Stützstruktur 2 z. B. manuell oder (teil-) automatisiert entfernt.

Vor der Entfernung des dreidimensionalen Objekts 1 von der Stützstruktur 2 bzw. der Bauplatte kann das dreidimensionale Objekt 1 jedoch bearbeitet bzw. behandelt werden. So ist es z. B. möglich, dass das auf der Stützstruktur 2 angeordnete dreidimensionale Objekt 1 geeigneten Nachbearbeitungsprozessen zur Erhöhung der Oberflächengüte unterzogen wird. Möglich ist es auch, das weiterhin auf der Stützstruktur 2 angeordnete dreidimensionale Objekt 1 einer Wärmebehandlung zu unterziehen, um vorhandene innere mechanische Spannungen abzubauen. Möglich ist es ferner, das weiterhin auf der Stützstruktur 2 angeordnete dreidimensionale Objekt 1 zu reinigen, d. h. insbesondere oberflächenseitig anhaftendes Baumaterial zu entfernen.

Um wenigstens eine die Eigenschaften der bis dahin ausgebildeten Stützstruktur 2 und/oder die Eigenschaften der bis dahin ausgebildeten Teilobjekte 6 beeinflussende Maßnahme, d. h. z. B. eine Wärmebehandlung, durchzuführen, kann das Ausbilden der Stützstruktur 2 und/oder das Ausbilden der Teilobjekte 6 auch zeitweise, d. h. für einen bestimmten Zeitraum, unterbrochen werden.

Ein oder mehrere Teilobjekte 6 können mit einem ein, insbesondere geschlossenes, Aufnahmevolumen begrenzenden Aufnahmeraum zur Aufnahme wenigstens eines Drittgegenstands ausgebildet werden. Bei einem solchen Drittgegenstand kann es sich beispielsweise um ein, z. B. sandwichartig aufgebautes, Leichtbauelement einer Leichtbaustruktur handeln. Dies ist insbesondere zweckmäßig, wenn es sich bei dem dreidimensionalen Objekt 1 um ein eine Tragfläche oder einen Teil einer Tragfläche bildendes Tragflächenelement handelt.

### BEZUGSZEICHENLISTE

- 1: Objekt
- 2: Stützstruktur
- 3: Bauplatte
- 4: Baukammer
- 5: Stützelement
- 6: Teilobjekt
- 7: Verbindungsbereich
- 8: Spaltraum

## Patentansprüche

1. Verfahren zum Herstellen eines dreidimensionalen Objekts (1) durch aufeinander folgendes Verfestigen von Schichten eines mittels Strahlung verfestigbaren pulverartigen Baumaterials, mit folgenden Verfahrensschritten:
- Vorsehen einer Lasersinter- oder Laserschmelzanlage mit einem Gehäuse, einer darin angeordneten Baukammer, einer Beschichtungsvorrichtung zum schichtweisen aufbringen von Baumaterial, einer Bestrahlungseinrichtung zum Bestrahlen der aufgetragenen Schichten des Baumaterials und einer Gruppenstruktur, auf die generativ das Objekt und/oder eine Stützstruktur für das Objekt aufgebaut wird,
- Ausbilden der Stützstruktur (2) zur zumindest abschnittsweisen Stützung des herzustellenden dreidimensionalen Objekts (1) durch aufeinander folgendes Verfestigen von Schichten des Baumaterials,
- Ausbilden mehrerer, jeweils einen bestimmten Teilbereich des herzustellenden dreidimensionalen Objekts (1) bildender einzelner Teilobjekte (6) durch aufeinander folgendes Verfestigen von Schichten des Baumaterials, wobei wenigstens ein Teilobjekt (6) zumindest abschnittsweise auf der Stützstruktur (2) ausgebildet wird, wobei die einzelnen Teilobjekte (6) jeweils einen bestimmten Querschnittsteilbereich des herzustellenden dreidimensionalen Objekts (1) bilden und im Weiteren unter Ausbildung des dreidimensionalen Objekts (1) miteinander zu verbinden sind und miteinander verbunden werden, wobei durch die Auf- oder Unterteilung des herzustellenden dreidimensionalen Objekts (1) in einzelne Teilobjekte (6) material- oder fertigungsbedingte Verzugseffekte reduziert werden,
- Ausbilden von Verbindungsbereichen (7) zwischen den Teilobjekten (6) zur zumindest abschnittsweisen Verbindung der Teilobjekte (6) unter Ausbildung des dreidimensionalen Objekts,
- Entfernen des dreidimensionalen Objekts (1) von der Stützstruktur (2) nach dem Ausbilden der Verbindungsbereiche (7).

2. Verfahren nach Anspruch 1, wobei zumindest ein Teil der Stützstruktur (2) und zumindest ein Teil wenigstens eines Teilobjekts (6) simultan ausgebildet werden.

3. Verfahren nach Anspruch 1 oder 2, wobei das Ausbilden der Verbindungsbereiche (7) außerhalb oder innerhalb der SLS- oder LSM-Anlage durchgeführt wird.

4. Verfahren nach einem der vorhergehenden Ansprüche, wobei die Verbindungsbereiche (7) derart ausgebildet werden, dass sie jeweils nebeneinander und/oder übereinander angeordnet auszubildende oder ausgebildete Teilobjekte (6) zumindest abschnittsweise miteinander verbinden.

5. Verfahren nach einem der vorhergehenden Ansprüche, wobei die Verbindungsbereiche (7) in Abhängigkeit der Position der über diese zu verbindenden Teilobjekte (6) bezüglich des herzustellenden dreidimensionalen Objekts (1) geometrisch unterschiedlich ausgeführt werden.

6. Verfahren nach einem der vorhergehenden Ansprüche, wobei zunächst zumindest ein Teil der Teilobjekte (6) über Verbindungsbereiche (7) einer ersten, insbesondere punktförmigen, geometrischen Gestalt Verbindungsbereiche (7) verbunden werden, um die derart miteinander verbundenen Teilobjekte (6) in einen handhabungsfähigen Zustand zu überführen, und nachfolgend Verbindungsbereiche (7) einer zweiten, insbesondere linienförmigen, geometrischen Gestalt ausgebildet werden und/oder nachfolgend bereits ausgebildete Verbindungsbereiche (7) der ersten geometrischen Gestalt, unter Ausbildung von, insbesondere linienförmigen, Verbindungsbereichen (7) der zweiten geometrischen Gestalt ergänzt werden.

7. Verfahren nach einem der vorhergehenden Ansprüche, wobei wenigstens ein Teil der Verbindungsbereiche (7) zumindest abschnittsweise derart elastisch federnd ausgebildet wird, dass verzugsbedingte mechanische Spannungen der Teilobjekte (6) und/oder des Objekts (1) reduziert werden.

8. Verfahren nach einem der vorhergehenden Ansprüche, wobei nebeneinander und/oder übereinander angeordnete Teilobjekte (6) derart miteinander verbunden werden, dass zwischen diesen ein schlitzartiger Spaltraum (8) gebildet wird.

9. Verfahren nach einem der vorhergehenden Ansprüche, wobei das Ausbilden entsprechender Verbindungsbereiche (7) durch Verfestigen pulverartigen Baumaterials und/oder durch Aufschmelzen bereits verfestigter Teilobjektabschnitte bereits hergestellter Teilobjekte (6) erfolgt.

10. Verfahren nach einem der vorhergehenden Ansprüche, wobei jeweilige zu verbindende Teilobjekte (6) durch das Ausbilden entsprechender Verbindungsbereiche (7) stoffschlüssig miteinander verbunden werden.

11. Verfahren nach Anspruch 10, wobei die jeweiligen zu verbindenden Teilobjekte (6) miteinander verschweißt werden.

12. Verfahren nach einem der vorhergehenden Ansprüche, wobei das Ausbilden der Stützstruktur (2) und/oder das Ausbilden der Teilobjekte (6) zeitweise unterbrochen wird, um wenigstens eine die Eigenschaften der bis dahin ausgebildeten Stützstruktur (2) und/oder die Eigenschaften der bis dahin ausgebildeten Teilobjekte (6) beeinflussende Maßnahme, insbesondere eine Wärmebehandlung, durchzuführen.

13. Verfahren nach einem der vorhergehenden Ansprüche, wobei wenigstens zwei der jeweiligen Teilobjekte (6) mit gleicher oder unterschiedlicher geometrischer Gestalt ausgebildet werden.

14. Verfahren nach einem der vorhergehenden Ansprüche, wobei wenigstens ein Teilobjekt (6) mit wenigstens einem ein, insbesondere geschlossenes, Aufnahmevolumen begrenzenden Aufnahmeraum zur Aufnahme wenigstens eines Drittgegenstands ausgebildet wird.

## Claims

1. A method for producing a three-dimensional object (1) by successive solidification of layers of a powder-like build material that is solidifiable by radiation, having the following method steps:
- providing a laser sintering unit or laser melting unit having a housing, a build chamber situated therein, a coating device for applying build material in layers, an irradiation device for irradiating the applied layers of the build material, and a group structure onto which the object and/or a support structure for the object are/is generatively built up,
- forming the support structure (2) for supporting, at least in part, the three-dimensional object (1) to be produced, by successive solidification of layers of the build material,
- forming multiple individual partial objects (6), each of which forms a certain partial area of the three-dimensional object (1) to be produced, by successive solidification of layers of the build material, wherein at least one partial object (6) is formed, at least in part, on the support structure (2), wherein the partial objects each form a determined part of the cross-section of the three-dimensional object (1) to be manufactured and are, in the following, under formation of the three-dimensional object (1) to be connected with each other and are connected with each other, wherein through the division or subdivision of the three-dimensional object (1) to be manufactured into individual partial objects (6), deformation effects related to material or production can be reduced,
- forming connecting areas (7) between the partial objects (6) for connecting, at least in part, the partial objects (6) to form the three-dimensional object,
- removing the three-dimensional object (1) from the support structure (2) after the connecting areas (7) are formed.

2. The method according to Claim 1, wherein at least a portion of the support structure (2) and at least a portion of at least one partial object (6) are formed simultaneously.

3. The method according to Claim 1 or 2, wherein the formation of the connecting areas (7) is carried out outside or inside the SLS unit or LSM unit.

4. The method according to one of the preceding claims, wherein the connecting areas (7) are designed in such a way that in each case they connect, at least in part, partial objects (6) that are formed or that are to be formed next to one another and/or on top of one another.

5. The method according to one of the preceding claims, wherein the connecting areas (7) have different geometric designs with respect to the three-dimensional object (1) to be produced, depending on the position of the partial objects (6) to be connected via the connecting areas.

6. The method according to one of the preceding claims, wherein at least a portion of the partial objects (6) are first connected via connecting areas (7) of a first, in particular punctiform, geometric shape in order to convert the partial objects (6) connected to one another in this way into a handleable state, and subsequently, connecting areas (7) of a second, in particular linear, geometric shape are formed, and/or subsequently, already formed connecting areas (7) of the first geometric shape are supplemented to form in particular linear connecting areas (7) of the second geometric shape.

7. The method according to one of the preceding claims, wherein at least a portion of the connecting areas (7), at least in part, have an elastically resilient design such that mechanical stresses on the partial objects (6) and/or the object (1) caused by warping are reduced.

8. The method according to one of the preceding claims, wherein partial objects (6) situated next to one another and/or on top of one another are joined together in such a way that a slot-like gap (8) is formed between them.

9. The method according to one of the preceding claims, wherein the formation of corresponding connecting areas (7) takes place by solidification of powder-like build material and/or by melting of already solidified partial object portions of already produced partial objects (6).

10. The method according to one of the preceding claims, wherein particular partial objects (6) to be connected are integrally joined together by forming corresponding connecting areas (7).

11. The method according to Claim 10, wherein the particular partial objects (6) to be connected are welded together.

12. The method according to one of the preceding claims, wherein the formation of the support structure (2) and/or the formation of the partial objects (6) are/is temporarily interrupted in order to carry out at least one measure, in particular heat treatment, that influences the properties of the support structure (2) formed up to that point and/or the properties of the partial objects (6) formed up to that point.

13. The method according to one of the preceding claims, wherein at least two of the particular partial objects (6) are formed with the same or different geometric shapes.

14. The method according to one of the preceding claims, wherein at least one partial object (6) having at least one receiving space that delimits an in particular closed receiving volume is designed for accommodating at least one third object.

## Revendications

1. Procédé de fabrication d'un objet tridimensionnel (1) par solidification successive de couches d'un matériau de construction en poudre pouvant être solidifié par irradiation, comprenant les étapes suivantes consistant à :
- prévoir une installation de frittage au laser ou de fonderie au laser avec une enceinte, une chambre de construction disposée dans celle-ci, un dispositif de couchage pour appliquer un matériau de construction par couches, un équipement d'irradiation pour irradier les couches appliquées du matériau de construction et une structure de groupement sur laquelle l'objet et/ou une structure de support pour l'objet est construit(e) de manière générative,
- réaliser la structure de support (2) pour supporter au moins localement l'objet tridimensionnel (1) à fabriquer par solidification successive de couches du matériau de construction,
- réaliser plusieurs objets partiels (6) individuels constituant respectivement une certaine zone partielle de l'objet tridimensionnel (1) à fabriquer par solidification successive de couches du matériau de construction, au moins un objet partiel (6) étant réalisé au moins localement sur la structure de support (2), les objets partiels (6) individuels formant chacun une zone de section déterminée de l'objet tridimensionnel (1) à fabriquer et devant être reliés entre eux par la suite en formant l'objet tridimensionnel (1) et étant reliés entre eux, des effets de déformation dus au matériau ou à la fabrication étant réduits par la division ou la subdivision de l'objet tridimensionnel (1) à fabriquer en objets partiels (6) individuels,
- réaliser des zones de jonction (7) entre les objets partiels (6) pour relier au moins localement les objets partiels (6) tout en réalisant l'objet tridimensionnel,
- retirer l'objet tridimensionnel (1) de la structure de support (2) après réalisation des zones de jonction (7).

2. Procédé selon la revendication 1, dans lequel au moins une partie de la structure de support (2) et au moins une partie d'au moins un objet partiel (6) sont réalisées simultanément.

3. Procédé selon la revendication 1 ou 2, dans lequel la réalisation des zones de jonction (7) est effectuée à l'extérieur ou à l'intérieur de l'installation de frittage au laser ou de fonderie au laser.

4. Procédé selon l'une quelconque des revendications précédentes, dans lequel les zones de jonction (7) sont réalisées de telle sorte qu'elles relient ensemble au moins localement des objets partiels (6) à réaliser ou réalisés respectivement en étant disposés les uns à côté des autres et/ou les uns au-dessus des autres.

5. Procédé selon l'une quelconque des revendications précédentes, dans lequel les zones de jonction (7) sont configurées de manière géométriquement différente par rapport à l'objet tridimensionnel (1) à fabriquer, en fonction de la position des objets partiels (6) à relier par celles-ci.

6. Procédé selon l'une quelconque des revendications précédentes, dans lequel d'abord au moins une partie des objets partiels (6) est reliée par l'intermédiaire de zones de jonction (7) d'une première configuration géométrique, en particulier en forme de point, afin d'amener les objets partiels (6) ainsi reliés ensemble à un état maniable, et par la suite, des zones de jonction (7) d'une deuxième configuration géométrique, en particulier en forme de ligne, sont réalisées et/ou par la suite des zones de jonction (7) déjà réalisées de la première configuration géométrique sont complétées tout en réalisant des zones de jonction (7), en particulier en forme de ligne, de la deuxième configuration géométrique.

7. Procédé selon l'une quelconque des revendications précédentes, dans lequel au moins une partie des zones de jonction (7) est réalisée au moins localement de manière résiliente de façon à réduire des contraintes mécaniques des objets partiels (6) et/ou de l'objet (1), dues à des déformations.

8. Procédé selon l'une quelconque des revendications précédentes, dans lequel des objets partiels (6) disposés les uns à côte des autres et/ou les uns au-dessus des autres sont reliés ensemble de façon à former entre ceux-ci un interstice (8) en forme de fente.

9. Procédé selon l'une quelconque des revendications précédentes, dans lequel la réalisation de zones de jonction (7) correspondantes est effectuée par solidification d'un matériau de construction en poudre et/ou par fusion de sections d'objet partiel déjà solidifiées d'objets partiels (6) déjà fabriqués.

10. Procédé selon l'une quelconque des revendications précédentes, dans lequel des objets partiels (6) respectifs à relier sont reliés ensemble par liaison de matière par la réalisation de zones de jonction (7) correspondantes.

11. Procédé selon la revendication 10, dans lequel les objets partiels (6) respectifs à relier ensemble sont soudés les uns aux autres.

12. Procédé selon l'une quelconque des revendications précédentes, dans lequel la réalisation de la structure de support (2) et/ou la réalisation des objets partiels (6) est/sont temporairement interrompue(s) pour prendre au moins une mesure, en particulier effectuer un traitement thermique, affectant les propriétés de la structure de support (2) réalisée jusque là et/ou les propriétés des objets partiels (6) réalisés jusque là.

13. Procédé selon l'une quelconque des revendications précédentes, dans lequel au moins deux des objets partiels respectifs (6) sont réalisés avec une configuration géométrique identique ou différente.

14. Procédé selon l'une quelconque des revendications précédentes, dans lequel au moins un objet partiel (6) est réalisé avec au moins un espace de réception fermé limitant le volume de réception pour recevoir au moins un objet tiers.
